(19) 

Europäisches
Patentamt
European
Patent Office
Office européen
des brevets

(11) **EP 4 645 708 A1**

(12) **EUROPEAN PATENT APPLICATION**
published in accordance with Art. 153(4) EPC

(43) Date of publication:
**05.11.2025 Bulletin 2025/45**

(21) Application number: **23909938.5**

(22) Date of filing: **30.11.2023**

(51) International Patent Classification (IPC):
**H04B 7/0456** (2017.01)

(52) Cooperative Patent Classification (CPC):
**H04B 7/0456; H04B 7/06**

(86) International application number:
**PCT/CN2023/135631**

(87) International publication number:
**WO 2024/140008 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022 CN 202211698451**

(71) Applicant: **ZTE Corporation
Shenzhen, Guangdong 518057 (CN)**

(72) Inventors:
• **SI, Yuan
Shenzhen, Guangdong 518057 (CN)**
• **ZHANG, Shujuan
Shenzhen, Guangdong 518057 (CN)**
• **CHEN, Yijian
Shenzhen, Guangdong 518057 (CN)**

(74) Representative: **Aipex B.V.
Vestdijk 51
5611 CA Eindhoven (NL)**

(54) **INFORMATION TRANSMISSION METHOD, DEVICE, AND STORAGE MEDIUM**

(57)    Provided are an information transmission method, a device, and a storage medium. The information transmission method applied to a first communication node includes receiving a measurement reference signal; selecting a precoding matrix from a codebook based on the measurement reference signal, where the precoding matrix is obtained from a first preset number of first vectors, the first vectors are constructed by using at least a first function, the first function includes at least one of a first parameter or a second parameter, the first parameter belongs to a first candidate set, the second parameter belongs to a second candidate set, the difference between two adjacent elements in the first candidate set is determined by a first coefficient and the dimension of the first function, the first coefficient is a positive integer, the dimension of the first function indicates the number of elements in the first function, the first coefficient takes at least one value in response to a given value of the dimension of the first function, and the first preset number is an integer greater than or equal to 1; and reporting the selected precoding matrix to a second communication node.

EP 4 645 708 A1

| Receive a measurement reference signal | S110 |
| Select a precoding matrix from a codebook based on the measurement reference signal | S120 |
| Report the selected precoding matrix to the second communication node | S130 |

**FIG. 2**

**Description**

TECHNICAL FIELD

The present disclosure relates to the field of communication technologies, particularly an information transmission method, a device, and a storage medium.

BACKGROUND

In a wireless communication system, oversampling factors are introduced in a relatively fixed manner. Given a determined antenna array, the oversampling factors of the antenna array in different directions are determined accordingly. However, the variable "distance" is introduced in terms of a near-field codebook. The same spatial domain partitioning of basis vectors of codebooks with different distances results in excessively dense partitioning of near-distance basis vectors and excessively sparse partitioning of far-distance basis vectors. This partitioning method leads to redundant feedback in terms of near-distance codebooks and large quantization errors in terms of far-distance codebooks.

SUMMARY

In view of this, embodiments of present disclosure provide an information transmission method, a device, and a storage medium, ensuring information feedback precision and positioning precision and avoiding information feedback redundancy.

An embodiment of present disclosure provides an information transmission method. The method is applied to a first communication node. The method includes receiving a measurement reference signal; selecting a precoding matrix from a codebook based on the measurement reference signal; and reporting the selected precoding matrix to a second communication node. The precoding matrix is obtained from a first preset number of first vectors, the first vectors are constructed by using at least a first function, and the first function includes at least one of a first parameter or a second parameter. The first parameter belongs to a first candidate set, the second parameter belongs to a second candidate set, and the difference between two adjacent elements in the first candidate set is determined by a first coefficient and the dimension of the first function. The first coefficient is a positive integer, the dimension of the first function indicates the number of elements in the first function, the first coefficient takes at least one value in response to a given value of the dimension of the first function, and the first preset number is an integer greater than or equal to 1.

An embodiment of present disclosure provides an information transmission method. The method is applied to a second communication node. The method includes determining a measurement reference signal; transmitting the measurement reference signal to a first communication node; and receiving a precoding matrix transmitted by the first communication node to perform a downlink precoding operation. The precoding matrix is obtained from a first preset number of first vectors, the first vectors are constructed by using at least a first function, and the first function includes at least one of a first parameter or a second parameter. The first parameter belongs to a first candidate set, the second parameter belongs to a second candidate set, the difference between two adjacent elements in the first candidate set is determined by a first coefficient and the dimension of the first function. The first coefficient is a positive integer, the dimension of the first function indicates the number of elements in the first function, the first coefficient takes at least one value in response to a given value of the dimension of the first function, and the first preset number is an integer greater than or equal to 1.

An embodiment of present disclosure provides a communication device. The communication device includes a memory and at least one processor.

The memory is configured to store at least one program.

When executed by the at least one processor, the at least one program causes the at least one processor to perform the method of any previous embodiment.

An embodiment of present disclosure provides a storage medium storing a computer program which, when executed by a processor, causes the processor to perform the method of any previous embodiment.

BRIEF DESCRIPTION OF DRAWINGS

FIG. 1 is a diagram illustrating partitioning of codebook basis vectors in a near-field codebook according to the related art.
FIG. 2 is a flowchart of an information transmission method according to an embodiment of present disclosure.

FIG. 3 is a flowchart of an information transmission method according to an embodiment of present disclosure.
FIG. 4 is a block diagram of an information transmission apparatus according to an embodiment of present disclosure.
FIG. 5 is a block diagram of an information transmission apparatus according to an embodiment of present disclosure.
FIG. 6 is a diagram illustrating the structure of a communication device according to an embodiment of present disclosure.

DETAILED DESCRIPTION

Embodiments of present disclosure are described hereinafter in conjunction with drawings. Present disclosure is described hereinafter in conjunction with embodiments and the drawings. The examples described hereinafter are intended to explain present disclosure and not to limit the scope of present disclosure.

In a wireless communication system, a transmitter and a receiver use multiple antennas by means of spatial multiplexing to acquire a higher rate. Compared with a general spatial multiplexing method, an enhanced technique is that the receiver feeds back channel information to a transmitter, and the transmitter uses a transmit precoding technique according to the acquired channel information, greatly improving transmission performance. In Single-user Multi-input Multi-output (SU-MIMO), channel feature vector information is used for precoding. In Multiuser Multi-input Multi-output (MU-MIMO), more accurate channel information is required.

In 5G standards and specifications, channel state information (CSI) feedback is performed by using a codebook, and the performance of a MIMO transmit precoding technology is more dependent on the accuracy of codebook feedback. The basic principle of codebook-based channel information quantization feedback is as follows:
Assuming that the limited feedback channel capacity is $B$ bps/Hz, then the number of available codewords is $N = 2^B$. The feature vector space of a channel matrix is quantized to form a codebook space $\Re = \{F_1, F_2 ... F_N\}$. A transmitter and a receiver jointly store or generate the codebook in real time (the transmitter and the receiver store or generate the same codebook). Based on the channel matrix H obtained by the receiver, the receiver selects a codeword $\hat{F}$ that best matches the channel from $\Re$ according to a certain criterion and feeds back a codeword sequence number $i$ to the transmitter. Here, the codeword sequence number is referred to as a precoding matrix indicator (PMI). The transmitter finds a corresponding precoding codeword $\hat{F}$ based on the sequence number to obtain channel information. Here $\hat{F}$ indicates the feature vector information of the channel.

In 5G standards, by adopting a discrete Fourier transform (DFT) vector as the base vector of a codebook, the formed codebook is referred to as a DFT codebook. The DFT codebook is designed based on a far-field assumption. In the case where the transmitter and the receiver are far apart, a signal transmitted by the transmitter can be approximately regarded as being parallelly incident on the antenna array at the receiver, and the DFT vector can be well quantized into a radio channel, so that the DFT codebook can reflect a channel state relatively accurately. However, in the case where the transmitter and the receiver are close to each other, the signal can no longer be regarded as being parallelly incident; therefore a feedback error increases because CSI feedback is performed by using a codebook in a 5G standard, thereby affecting the transmission performance of the communication system.

To address this problem, a near-field codebook is proposed. The variable "distance" is introduced in terms of a near-field codebook on the basis of only spatial angle partitioning used in the original DFT codebook. By accurately modeling distance, the near-field codebook can precisely reflect the near-field channel. However, in the existing 5G standard, spatial partitioning is performed in a fixed manner, where the horizontal or vertical dimension is divided into N*O segments. Here, N indicates the number of antennas in this dimension, and O indicates the oversampling factor of this dimension. The oversampling factor is determined according to the following rule: If the number of antennas in this dimension is greater than 1, then the oversampling factor O = 4; otherwise, O = 1.

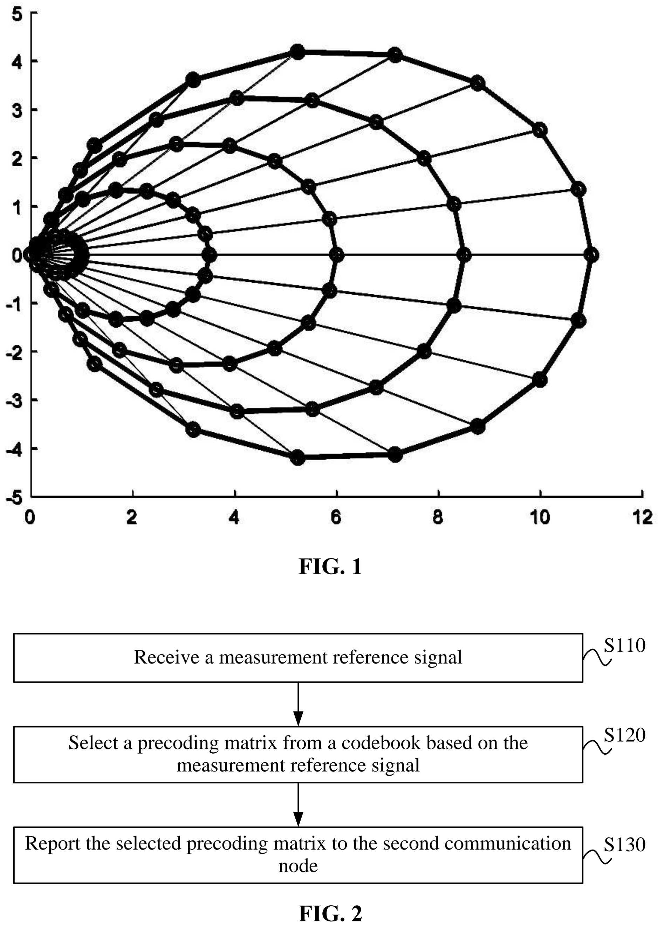

It can be observed that the way the oversampling factor is introduced in the current 5G standard is relatively fixed. Once the antenna array is determined, the oversampling factors of the antenna array in different directions are fixed accordingly. The variable "distance" is introduced in terms of a near-field codebook. FIG. 1 is a diagram illustrating partitioning of codebook basis vectors in a near-field codebook according to the related art. As shown in FIG. 1, the same spatial domain partitioning of basis vectors of codebooks with different distances results in excessively dense partitioning of near-distance basis vectors and excessively sparse partitioning of far-distance basis vectors. As shown in FIG. 1, this partitioning method leads to redundant feedback in terms of near-distance codebooks and large quantization errors in terms of far-distance codebooks.

In an embodiment, FIG. 2 is a flowchart of an information transmission method according to an embodiment of present disclosure. This embodiment is applied to the case of dynamic coefficient configuration. This embodiment may be performed by a first communication node. Illustratively, the first communication node may be user equipment (UE). As shown in FIG. 2, this embodiment includes S110 to S130.

In S110, a measurement reference signal is received.

The measurement reference signal is configured to estimate a channel between the first communication node and a second communication node. In this embodiment, the first communication node receives the measurement reference signal transmitted by the second communication node and then performs channel estimation based on the measurement reference signal to obtain the measurement result of the channel corresponding to the first communication node.

In this embodiment, the second communication node may serve as the transmitter of the measurement reference signal, and correspondingly, the first communication node may serve as the receiver of the measurement reference signal.

In S120, a precoding matrix is selected from a codebook based on the measurement reference signal.

The precoding matrix is obtained from a first preset number of first vectors, the first vectors are constructed by using at least a first function, the first function includes at least one of a first parameter or a second parameter. The first parameter belongs to a first candidate set, the second parameter belongs to a second candidate set, and the difference between two adjacent elements in the first candidate set is determined by a first coefficient and the dimension of the first function. The first coefficient is a positive integer, the dimension of the first function indicates the number of elements in the first function, the first coefficient takes at least one value in response to a given value of the dimension of the first function, and the first preset number is an integer greater than or equal to 1.

In an embodiment, the codebooks may be of different types, for example, Type-I codebook, Type-II codebook, and enhanced Type-II codebook. In this embodiment, the type of a codebook is not limited. For different types of codebooks, different formulas are used in generating a precoding matrix. The type of a codebook may be selected according to the actual situation.

In an embodiment, the first parameter represents an angle domain partitioning step size corresponding to the position of the antenna array (that is, the transmitter, which may also be understood as the second communication node); and the second parameter represents a distance domain partitioning step size corresponding to the position of the antenna array (that is, the transmitter, which may also be understood as the second communication node). Different second parameters (that is, distance domain partitioning step sizes) may be provided. That is, the distance domain of the transmitter is partitioned according to a non-uniform partitioning rule.

In an embodiment, the precoding matrix may be constructed by using one or more first vectors $v_{l,m}$, and the first vectors may be constructed by using the first function $f_1(l, m)$, that is, $v_{l,m} = f_1(l, m)$. The first function includes at least one of two variables: the first parameter $l$ or the second parameter m. The first candidate set includes multiple values of the first parameter. That is, at least one value may be selected from the first candidate set to serve as the value of the first parameter. The second candidate set includes multiple values of the second parameter. That is, at least one value may be selected from the second candidate set to serve as the value of the second parameter.

In an embodiment, the minimum value in the first candidate set is 0, that is, values in the first candidate set are an arithmetic progression starting from 0. In this embodiment, each value of the second parameter is included a corresponding first candidate set, this may be understood as that different values of the second parameter are all related to the value of one first coefficient. In an embodiment, the first coefficient may have different values, and the value range of the first coefficient is related to the antenna of the transmitter.

In an embodiment, the difference between two adjacent elements in the first candidate set is determined by the first coefficient $O_1$ and the dimension $N_1$ of the first function. $O_1$ is a positive integer. $N_1$ indicates the number of elements in the first function. For a given value of $N_1$, $O_1$ takes at least one value.

In S130, the selected precoding matrix is reported to the second communication node.

In an embodiment, the first communication node may obtain the corresponding first vector by changing the first parameter and the second parameter in the codebook; and then obtain the corresponding precoding matrix based on the first vector and report the precoding matrix to the second communication node so that the second communication node can perform downlink encoding based on the precoding matrix, thereby achieving the effect of dynamically configuring the coefficient, ensuring the information feedback accuracy and the positioning accuracy, and avoiding information feedback redundancy.

In an embodiment, the difference between two adjacent elements in the first candidate set is determined by the first coefficient and the dimension of the first function in one of the following manners: The difference between two adjacent elements in each first candidate set is determined by the dimension of the first function and at least two first coefficients; or the difference between two adjacent elements in each first candidate set is determined by the dimension of the first function and one first coefficient.

In an embodiment, the difference between two adjacent elements in each first candidate set may be determined by the dimension $N_1$ of the first function and at least two first coefficients $O_1$ or may be directly determined by the dimension $N_1$ of the first function and one first coefficient $O_1$.

In an embodiment, a correspondence exists between the first coefficient and the second parameter. In an embodiment, a correspondence table may be established between the first coefficient and the second parameter so that a corresponding first coefficient can be found according to the correspondence table between the first coefficient and the second parameter and according to the second parameter.

In an embodiment, a larger value of the second parameter indicates a smaller value of the first coefficient. In an embodiment, the value of the first coefficient is inversely proportional to the value of the second parameter. That is, the larger the second parameter, the smaller the value of the first coefficient. Illustratively, assuming that a set of values of the second parameter is $\frac{1}{2}, \frac{1}{4}, \frac{1}{6}, \frac{1}{8} \cdots \frac{1}{2M}$, and the maximum value of the first coefficient is 4, then a set of values of the first coefficient may be 1, 2, 3, 4, ..., 4.

In an embodiment, the first coefficient is determined by the second parameter. In an embodiment, the value of the first coefficient may be determined by the second communication node by using the second parameter.

In an embodiment, the value of the first coefficient is determined by one of the following: the integer part of the ratio of the maximum element in the second candidate set to one element in the second candidate set; the ceiling value of the ratio of the maximum element in the second candidate set to one element in the second candidate set; the floor value of the ratio of the maximum element in the second candidate set to one element in the second candidate set; or the product of a first preset value and the ratio of the maximum element in the second candidate set to one element in the second candidate set, where the first preset value is any real number that enables the first coefficient to be a positive integer.

In an embodiment, the maximum element in the second candidate set refers to the maximum value of the second parameter in the second candidate set. In an embodiment, elements in the second candidate set may be sorted in order of magnitude to take the maximum value as the first element in the second candidate set. In an embodiment, the maximum value may be selected from the second candidate set to serve as the maximum element in the second candidate set. In an embodiment, the value of the first coefficient is equal to the rounded value of the ratio of the maximum element in the second candidate set to one element in the second candidate set. In an embodiment, the value of the first coefficient is equal to the ceiling value of the ratio of the maximum element in the second candidate set to one element in the second candidate set. In an embodiment, the value of the first coefficient is equal to the floor value of the ratio of the maximum element in the second candidate set and one element in the second candidate set. In an embodiment, the value of the first coefficient is equal to the product of a first preset value and the ratio of the maximum element in the second candidate set to one element in the second candidate set, where the first preset value is any real number that enables the first coefficient to be a positive integer.

Illustratively, assuming that the maximum value of the second parameter in the second candidate set is the first element in the second candidate set, the first element is denoted as $m_1$, the i-th element in the second candidate set is denoted as $m_i$, and the i-th first coefficient is denoted as $O_i$, then the value is determined by the integer part of the ratio of the maximum element in the second candidate set to one element in the second candidate set, that is, $O_i = \left[ \frac{m_1}{m_i} \right]$; or the value is determined by the ceiling value of the ratio of the maximum element in the second candidate set to one element in the second candidate set, that is, $O_i = \left\lceil \frac{m_1}{m_i} \right\rceil$; or the value is determined by the floor value of the ratio of the maximum element in the second candidate set to one element in the second candidate set, that is, $O_i = \left\lfloor \frac{m_1}{m_i} \right\rfloor$; or the value is determined by the product of a first preset value and the ratio of the maximum element in the second candidate set to one element in the second candidate set, that is, $O_i = a \frac{m_1}{m_i}$. Here [·] indicates rounding to the nearest integer, $\lceil \cdot \rceil$ indicates ceiling, $\lfloor \cdot \rfloor$ indicates floor, and $a$ indicates the first preset value.

In an embodiment, in the case where the value of the first coefficient is greater than the preconfigured maximum value, the value of the first coefficient is the preconfigured maximum value. In an embodiment, in the case where the value of the first coefficient is greater than the preconfigured maximum value of the first coefficient, the value of the first coefficient is the preconfigured maximum value of the first coefficient. In an embodiment, assuming that the maximum value of the first coefficient is denoted as $O_{max}$, then $O_i = O_{max}$.

In an embodiment, in the case where the difference between two adjacent elements in each first candidate set is determined by the dimension of the first function and one first coefficient, elements in the first candidate set are sorted in order of magnitude, where the difference between two adjacent elements is a constant value. In an embodiment, the difference between two adjacent elements in the first candidate set is an arithmetic progression, that is, after elements in the first candidate set are sorted in order of magnitude, the difference between two adjacent elements is a constant value.

In an embodiment, the first function is a vector including elements, where the number of elements in the first function is the same as the number of dimensions of the first function. At least one of the elements in the first function is at least one of the following: the product of the first parameter and a first index or the product of the second parameter and the square of the first index. The first index is the index of an element in the first function. The first index starts from 0. In an embodiment, the first function may be a vector containing $N_1$ elements. At least one of the elements in the first function is at least one of the following: the product of the first parameter $l$ and the first index $n_1$ or the product of the second parameter m and the square of the first index $n_1$.

In an embodiment, each second parameter corresponds to one first candidate set. In an embodiment, in the case where each first candidate set is determined by one first coefficient $O_1$ and the dimension $N_1$ of the first function, each different second parameter m or first coefficient $O_1$ corresponds to one first candidate set.

In an embodiment, the first vector is generated by using the first function and a second function. The second function includes at least one of a third parameter or a fourth parameter. The third parameter belongs to a third candidate set. The fourth parameter belongs to a fourth candidate set. The difference between two adjacent elements in the third candidate set is determined by a second coefficient and the dimension of the second function. The second coefficient is a positive integer. The dimension of the second function indicates the number of elements in the second function. The second coefficient takes at least one value in response to a given value of the dimension of the second function. At least one third candidate set is available in response to a given value of the dimension of the second function. The feature of the third candidate set is the same as the feature of the first candidate set.

In an embodiment, the feature of the third candidate set is the same as the feature of the first candidate set, this may be understood as that the feature of elements in the first candidate set is applicable to elements in the third candidate set.

In an embodiment, the difference between two adjacent elements in the third candidate set is determined by the second coefficient and the dimension of the second function in one of the following manners: The difference between two adjacent elements in each third candidate set is determined by the second coefficient and the dimension of one second function; or the difference between two adjacent elements in each third candidate set is determined by the second coefficient and dimensions of at least two second functions.

In an embodiment, a correspondence exists between the second coefficient and the fourth parameter.

In an embodiment, a larger value of the fourth parameter indicates a smaller value of the second coefficient.

In an embodiment, the second coefficient is determined by the fourth parameter.

In an embodiment, the value of the second coefficient includes one of the following: the integer part of the ratio of the maximum element in the fourth candidate set to one element in the fourth candidate set; the ceiling value of the ratio of the maximum element in the fourth candidate set to one element in the fourth candidate set; the floor value of the ratio of the maximum element in the fourth candidate set to one element in the fourth candidate set; or the product of a first preset value and the ratio of the maximum element in the fourth candidate set to one element in the fourth candidate set, where the first preset value is any real number that enables the second coefficient to be a positive integer.

In an embodiment, in the case where the value of the second coefficient is greater than the preconfigured maximum value, the value of the second coefficient is the preconfigured maximum value.

In an embodiment, in the case where the difference between two adjacent elements in each third candidate set is determined by the dimension of the second function and one second coefficient, elements in the third candidate set are sorted in order of magnitude, where the difference between two adjacent elements is a constant value. In an embodiment, the second function is a vector containing elements, where the number of elements in the second function is the dimension of the second function. At least one of the elements in the second function is at least one of the following: the product of the first parameter and a second index or the product of the second parameter and the square of the second index. The second index is the index of an element in the second function. The second index starts from 0.

In an embodiment, the second function may be a vector including $N_2$ elements. At least one of the elements in the second function is at least one of the following: the product of the first parameter $l$ and the second index $n_2$ or the product of the second parameter m and the square of the second index $n_2$.

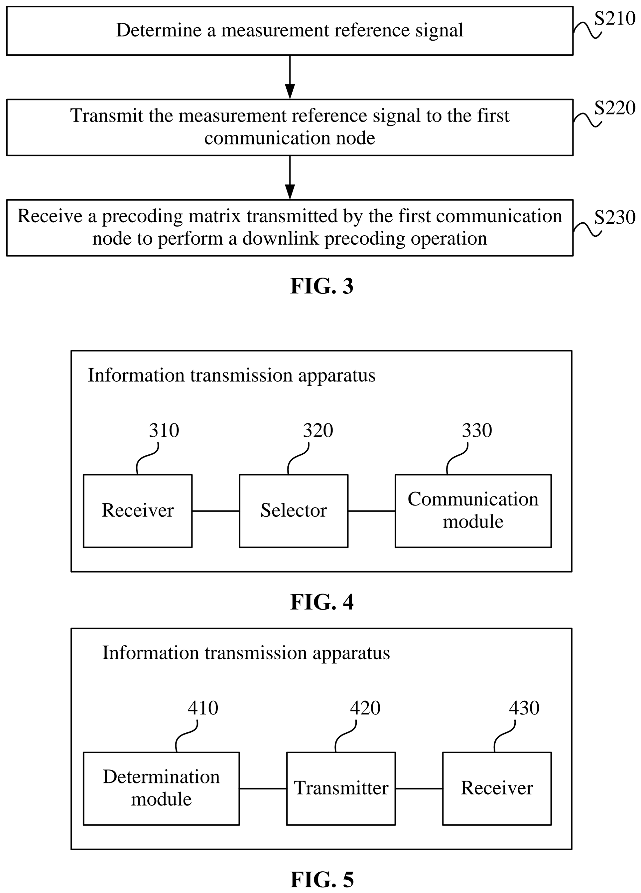

In an embodiment, FIG. 3 is a flowchart of an information transmission method according to an embodiment of present disclosure. This embodiment is applied to a second communication node. Illustratively, the second communication node may be a base station (gNB). As shown in FIG. 3, the information transmission method of this embodiment includes S210 to S230.

In S210, a measurement reference signal is determined.

In an embodiment, the codebook model may be a communication rule pre-negotiated between a first communication node and the second communication node. In an embodiment, the second communication node may select one measurement reference signal and the used codebook type and transmit the measurement reference signal to the first communication node.

In S220, the measurement reference signal is transmitted to the first communication node.

In S230, a precoding matrix transmitted by the first communication node is received to perform a downlink precoding operation.

The precoding matrix is obtained from a first preset number of first vectors, the first vectors are constructed by using at least a first function, the first function includes at least one of a first parameter or a second parameter. The first parameter belongs to a first candidate set, the second parameter belongs to a second candidate set, and the difference between two adjacent elements in the first candidate set is determined by a first coefficient and the dimension of the first function. The first coefficient is a positive integer, the dimension of the first function indicates the number of elements in the first function, the first coefficient takes at least one value in response to a given value of the dimension of the first function, and the first preset number is an integer greater than or equal to 1.

In an embodiment, the difference between two adjacent elements in the first candidate set is determined by the first coefficient and the dimension of the first function in one of the following manners: The difference between two adjacent elements in each first candidate set is determined by the dimension of the first function and at least two first coefficients; or the difference between two adjacent elements in each first candidate set is determined by the dimension of the first function and one first coefficient.

In an embodiment, a correspondence exists between the first coefficient and the second parameter.

In an embodiment, a larger value of the second parameter indicates a smaller value of the first coefficient.

In an embodiment, the first coefficient is determined by the second parameter.

In an embodiment, the value of the first coefficient is determined by one of the following: the integer part of the ratio of the maximum element in the second candidate set to one element in the second candidate set; the ceiling value of the ratio of the maximum element in the second candidate set to one element in the second candidate set; the floor value of the ratio of the maximum element in the second candidate set to one element in the second candidate set; or the product of a first preset value and the ratio of the maximum element in the second candidate set to one element in the second candidate set, where the first preset value is any real number that enables the first coefficient to be a positive integer.

In an embodiment, in the case where the value of the first coefficient is greater than the preconfigured maximum value, the value of the first coefficient is the preconfigured maximum value.

In an embodiment, in the case where the difference between two adjacent elements in each first candidate set is determined by the dimension of the first function and one first coefficient, elements in the first candidate set are sorted in order of magnitude, where the difference between two adjacent elements is a constant value.

In an embodiment, the first function is a vector including elements, where the number of elements in the first function is the same as the number of dimensions of the first function. At least one of the elements in the first function is at least one of the following: the product of the first parameter and a first index or the product of the second parameter and the square of the first index. The first index is the index of an element in the first function. The first index starts from 0.

In an embodiment, each second parameter corresponds to one first candidate set.

In an embodiment, the first vector is generated by using the first function and a second function. The second function includes at least one of a third parameter or a fourth parameter. The third parameter belongs to a third candidate set. The fourth parameter belongs to a fourth candidate set. The difference between two adjacent elements in the third candidate set is determined by a second coefficient and the dimension of the second function. The second coefficient is a positive integer. The dimension of the second function indicates the number of elements in the second function. The second coefficient takes at least one value in response to a given value of the dimension of the second function. At least one third candidate set is available in response to a given value of the dimension of the second function. The feature of the third candidate set is the same as the feature of the first candidate set.

In an embodiment, the second function is a vector including elements, where the number of elements in the second function is the same as the number of dimensions of the second function. At least one of the elements in the second function is at least one of the following: the product of the first parameter and a second index or the product of the second parameter and the square of the second index. The second index is the index of an element in the second function. The second index starts from 0.

The following describes an information transmission process in detail by using different embodiments.

Embodiment one

A measurement reference signal and the type of a codebook used are determined. If both a transmitter and a receiver use a Type-I codebook, the codebook may be represented by using the following formula:

$$W_{l,m,k} = \frac{1}{\sqrt{P}} \begin{bmatrix} v_{l,m} \\ \varphi_k v_{l,m} \end{bmatrix} \quad (1\text{-}1).$$

By changing the value of the variables $l, m, k$ in the codebook, it is possible to generate different precoding matrixes by using formula (1-1). In formula (1-1), $P = 2N_1$ and $\varphi_k = e^{j\pi k/2}$, representing the phase difference between different polarization ports. For example, k may be a positive integer such as 0,1,2,3. $v_{l,m}$ is a first vector that may be constructed by using a first function $f_1(l, m)$, that is, $v_{l,m} = f_1(l, m)$. The first function $f_1(l, m)$ includes two variables: a first parameter $l$ and a second parameter m. The first function is a vector containing $N_1$ elements. Two expression forms of $f_1(l, m)$ are given below:

$$f_1(l, m) =$$

$$\left[e^{j\pi\frac{(1-l^2)}{m\lambda}} \quad e^{j\pi\left[\frac{(1-l^2)}{m\lambda}-\frac{2dl}{\lambda}+\frac{2d^2m}{\lambda}\right]} \quad \cdots \quad e^{j\pi\left[\frac{(1-l^2)}{m\lambda}-\frac{2(n-1)dl}{\lambda}+\frac{2(n-1)^2d^2m}{\lambda}\right]} \quad \cdots \quad e^{j\pi\left[\frac{(1-l^2)}{m\lambda}-\frac{2(N_1-1)dl}{\lambda}+\frac{2(N_1-1)^2d^2m}{\lambda}\right]}\right]^T$$

(1-2);

$$f_1(l, m)$$

$$= \left[e^{j\pi\frac{(1-l^2)}{m}} \quad e^{j\pi\left[\frac{(1-l^2)}{m}-l+\frac{m}{2}\right]} \quad \cdots \quad e^{j\pi\left[\frac{(1-l^2)}{m}-(n-1)l+(n-1)^2\frac{m}{2}\right]} \quad \cdots \quad e^{j\pi\left[\frac{(1-l^2)}{m}-(N_1-1)l+(N_1-1)^2\frac{m}{2}\right]}\right]^T$$

(1-3).

In formula (1-2), j denotes an imaginary unit, $\lambda$ denotes the wavelength of the measurement reference signal, d denotes a spacing between array elements of the transmitter, and $n$ denotes the index of an element in the vector $f_1(l, m)$. As described in this embodiment, at least one of formula (1-2) or formula (1-3) is at least one of the product of the first parameter and $n_1$ or the product of the second parameter and the square of $n_1$. $n_1$ indicates the index of an element in the first vector.

The receiver selects a precoding matrix from the codebook based on the received measurement reference signal. The precoding matrix is constructed from L first vectors. Based on the received measurement signal, the receiver selects L values of the first parameter from a first candidate set, selects L values of the second parameter from a second candidate set, and reports the values to the transmitter. L indicates a first preset number. L is an integer not less than 1.

Values in the first candidate set are determined by parameters $O_1$ and $N_1$. An example of generating the first candidate set is as follows:

In an embodiment, the value of $O_1$ may be determined by the transmitter by using the second parameter. See Table 1.

Table 1 Correspondence between $O_1$ and the second parameter m

| m | $m_1$ | $m_2$ | $m_3$ | $m_4$ | ... | $m_n$ |
|---|---|---|---|---|---|---|
| $O_1$ | $O_{1,1}$ | $O_{1,2}$ | $O_{1,3}$ | $O_{1,4}$ | ... | $O_{1,n}$ |

In an embodiment, the value of the i-th $O_1$ (that is, $O_{1,i}$) is determined by one of the following: the integer part of the ratio of the maximum value (that is, the maximum element) of the second parameter in the second candidate set to the value of the i-th second parameter in the second candidate set; the ceiling value of the ratio of the maximum value (that is, the maximum element) of the second parameter in the second candidate set to the value of the i-th second parameter in the second candidate set; the floor value of the ratio of the maximum value (that is, the maximum element) of the second parameter in the second candidate set to the value of the i-th second parameter in the second candidate set; or the product of a second preset value and the ratio of the maximum value (that is, the maximum element) of the second parameter in the second candidate set to the value of the i-th second parameter in the second candidate set, where the second preset value is any real number that enables the first coefficient to be a positive integer, and $i$ is a positive integer greater than or equal to 1.

Illustratively, assuming that the maximum value of the second parameter in the second candidate set is denoted as $m_1$, the i-th element in the second candidate set is denoted as $m_i$, and the i-th first coefficient is denoted as $O_{1,i}$, then

$$O_i = \left[\frac{m_1}{m_i}\right] \quad (1);$$

or

$$O_i = \left\lceil \frac{m_1}{m_i} \right\rceil \quad (2);$$

or $\quad O_i = \left\lfloor \frac{m_1}{m_i} \right\rfloor \quad (3);$ or

$$O_i = a\frac{m_1}{m_i} \quad (4).$$

Here $[\cdot]$ indicates rounding to the nearest integer, $\lceil \cdot \rceil$ indicates ceiling, and $\lfloor \cdot \rfloor$ indicates floor.

In an embodiment, in the case where the value of $O_{1,i}$ is greater than the preconfigured maximum value $O_{1,max}$ of the first coefficient, the value of the i-th first coefficient is the maximum value of the first coefficient.

For example, when a set of values of m configured by the base station are $\frac{1}{2}, \frac{1}{4}, \frac{1}{6}, \frac{1}{8}, \frac{1}{10} \cdots \frac{1}{2M}$, formula (1) is used for calculation, and $O_{1,max} = 4$, the obtained results are described in Table 2:

Table 2 Correspondence between m and $O_1$

| $i$ | 1 | 2 | 3 | 4 | 5 | ... | M |
|---|---|---|---|---|---|---|---|
| $m$ | $\frac{1}{2}$ | $\frac{1}{4}$ | $\frac{1}{6}$ | $\frac{1}{8}$ | $\frac{1}{10}$ | ... | $\frac{1}{2M}$ |
| $O_{1,i}$ | 1 | 2 | 3 | 4 | 4 | ... | 4 |

The difference between two elements in the first candidate set is determined by $O_1$ and $N_1$. In the set, the $i_{1,1}$th element $= \frac{2i_{1,1}}{N_1 O_1}$. When each first candidate set is determined by $N_1$ and one $O_1$, each different second parameter (or $N_1$) corresponds to one first candidate set. The following gives an example of the first candidate set:

Table 1-1 Example of the first candidate set

| $i_{1,1}$ | 0 | 1 | 2 | ... | n | ... | $N_1 O_1$-1 |
|---|---|---|---|---|---|---|---|
| $l$ | 0 | $\frac{2}{N_1 O_1}$ | $\frac{4}{N_1 O_1}$ | ... | $\frac{2n}{N_1 O_1}$ | ... | $\frac{2N_1 O_1 - 2}{N_1 O_1}$ |

When the value of L is 1, the precoding matrix is constructed from one first vector $v_{l,m}$, so the receiver selects one first parameter from the first candidate set and one second parameter from the second candidate set based on the received measurement reference signal, determines the value of the parameter k, and feeds back the values of indexes $i_{1,1}$ and $i_{1,2}$ and the parameter k to the transmitter. The transmitter may calculate the precoding matrix by using the indexes and the parameter fed back by the receiver and by using formula (1-1) and may use the precoding matrix in downlink precoding.

In addition, optionally, the first parameter $l$ and the second parameter m can be used for long-term or wideband feedback, and the parameter k can be used for short-term or subband feedback.

Embodiment two

The codebook type in embodiment one may also be a Type-II codebook. The codebook form may be represented by using the following formula:

$$W_{l,m,k,p^{(1)},p^{(2)}} = \frac{1}{\sqrt{P\sum_{i=0}^{2L-1}(p_i^{(1)}p_i^{(2)})^2}} = \begin{bmatrix} \sum_{i=0}^{L-1} v_{l_i,m_i}\, p_i^{(1)} p_i^{(2)} \varphi_{k_i} \\ \sum_{i=0}^{L-1} v_{l_i,m_i}\, p_{i+L}^{(1)} p_{i+L}^{(2)} \varphi_{k_{i+L}} \end{bmatrix} \quad (2\text{-}1)$$

By changing the values of parameters such as variables $l, m, k, p^{(1)}, p^{(2)}$ in the codebook, it is possible to generate different precoding matrixes by using formula (2-1). In formula (2-1), $P = 2N_1$, $N_1$ denotes the dimension of the first vector $v_{l,m}$, $p_i^{(1)}$ denotes the wideband amplitude coefficient, and $p_i^{(2)}$ denotes the subband amplitude coefficient. In the Type-II feedback, the precoding matrix is constructed from L first vectors $v_{l,m}$. L may be a positive integer. $\varphi_k = e^{j\pi k/2}$. $v_{l,m}$ and the second candidate set may be obtained in the same manner as in embodiment one. The details are not described here again.

After receiving the measurement reference signal, the receiver may calculate, based on the measurement reference signal, L first vectors $v_{l0,m0}, v_{l1,m1}, v_{l2,m2}, \cdots, v_{l_{L-1},m_{L-1}}$ and calculate the following values of the selected L first vectors: wideband amplitudes: $p_0^{(1)}, p_1^{(1)}, p_2^{(1)}, ..., p_{L-1}^{(1)}$ and $p_L^{(1)}, p_{L+1}^{(1)}, p_{L+2}^{(1)}, ..., p_{2L-1}^{(1)}$; subband amplitudes: $p_0^{(2)}, p_1^{(2)}, p_2^{(2)}, ..., p_{L-1}^{(2)}$ and $p_L^{(2)}, p_{L+1}^{(2)}, p_{L+2}^{(2)}, ..., p_{2L-1}^{(2)}$; and subband phases: $\varphi_{k0}, \varphi_{k1}, \cdots \varphi_{kL-1}$ and $\varphi_{kL}, \varphi_{kL+1}, \cdots \varphi_{k2L-1}$; and may feed back these values to the transmitter.

The transmitter calculates the precoding matrix by using formula (2-1) based on $l, m, k$ and the amplitude coefficients $p_i^{(1)}$ and $p_i^{(2)}$ that are fed back by the receiver and performs downlink precoding.

In addition, optionally, the wideband amplitudes $p_0^{(1)}, p_1^{(1)}, p_2^{(1)}, ..., p_{L-1}^{(1)}$ and $p_L^{(1)}, p_{L+1}^{(1)}, p_{L+2}^{(1)}, ..., p_{2L-1}^{(1)}$, the selected L first parameters $l$ and second parameters m can be used for long-term or wideband feedback, and the subband amplitudes $p_0^{(2)}, p_1^{(2)}, p_2^{(2)}, ..., p_{L-1}^{(2)}$ and $p_L^{(2)}, p_{L+1}^{(2)}, p_{L+2}^{(2)}, ..., p_{2L-1}^{(2)}$ and the subband phases $\varphi_{k0}, \varphi_{k1}, \cdots \varphi_{kL-1}$ and $\varphi_{k0}, \varphi_{k1}, \cdots \varphi_{kL-1}$ can be used for short-term or subband feedback.

Embodiment three

The codebook type in embodiment one may also be an enhanced Type-II codebook. In the enhanced Type-II codebook, a precoding matrix is constructed from L first vectors. The codebook form may be represented by using the following formula:

$$W_{l,m,k,p^{(1)},p^{(2)},M_v,y_t^{(f)},\varphi_{i,f}} = \frac{1}{\sqrt{P\gamma_t}} = \begin{bmatrix} \sum_{i=0}^{L-1} v_{l_i,m_i} p_0^{(1)} \sum_{f=0}^{M_v-1} y_t^{(f)} p_{i,f}^{(2)} \varphi_{i,f} \\ \sum_{i=0}^{L-1} v_{l_i,m_i} p_1^{(1)} \sum_{f=0}^{M_v-1} y_t^{(f)} p_{i+L,f}^{(2)} \varphi_{i+L,f} \end{bmatrix} \quad (3\text{-}1)$$

In formula (3-1), $\gamma_t = \sum_{i=0}^{2L-1} \left( p_{\left\lfloor \frac{i}{L} \right\rfloor}^{(1)} \right)^2 \left| \sum_{f=0}^{M_v-1} y_t^{(f)} p_{i,f}^{(2)} \varphi_{i,f} \right|^2$ denotes a normalization coefficient, $P = 2N_1$, $N_1$ denotes the dimension of the first vector $v_{l,m}$, $p_0^{(1)}$ and $p_1^{(1)}$ denote polarization amplitudes of a wideband, $y_t^{(f)}$ denotes an element in a base vector used for frequency domain compression, $M_v$ denotes the number of selected frequency domain compression base vectors and is configured by the transmitter, $p_{i,f}^{(2)}$ and $\varphi_{i,f}$ denote the amplitude of the frequency domain compression base vector and the phase coefficient of the frequency domain compression base vector respectively. $v_{l,m}$ and the second candidate set are obtained in the same manner as in embodiment one. The details are not described here again. By changing the values of parameters such as variables $l, m, k, p^{(1)}, p^{(2)}$ in the codebook, it is possible to generate different precoding matrixes by using formula (3-1).

After receiving the measurement reference signal, the receiver may calculate, based on the measurement reference signal, L first vectors $v_{l0,m0}, v_{l1,m1}, v_{i2,m2}, \cdots, v_{l_{L-1},m_{L-1}}$ and calculate the following values of the selected L first vectors: wideband polarization amplitudes: $p_0^{(1)}$ and $p_1^{(1)}$ ; frequency domain compression vectors: $y_t^0, y_t^1, \ldots, y_t^{M_v-1}$ ; amplitudes of the frequency domain compression vectors: $p_i^0, p_i^1, \ldots, p_i^{M_v-1}$ and $p_{i+L}^0, p_{i+L}^1, \ldots, p_{i+L}^{M_v-1}$ ($i \in [0, L\text{-}1]$); and phases of the frequency domain compression vectors: $\varphi_{i,0}, \varphi_{i,1}, \ldots, \varphi_{i,M_v-1}$ and $\varphi_{i+L,0}, \varphi_{i+L,1}, \ldots, \varphi_{i+L,M_v-1}$ ($i \in [0, L\text{-}1]$); and may feed back these values to the transmitter.

The transmitter calculates the precoding matrix by using formula (3-1) based on these values reported by the receiver and performs downlink precoding.

Embodiment four

The codebook in embodiment one may also be expressed in formula (4-1), formula (4-2), or formula (4-3).

$$W_{l,l',m,m',k}^{(2)} = \frac{1}{\sqrt{2P}}\begin{bmatrix} v_{l,m} & v_{l',m'} \\ \varphi_k v_{l,m} & -\varphi_k v_{l',m'} \end{bmatrix} \text{ (4-1);}$$

$$W_{l,l',m,m',k}^{(2)} = \frac{1}{\sqrt{3P}}\begin{bmatrix} v_{l,m} & v_{l',m'} & v_{l,m} \\ \varphi_k v_{l,m} & \varphi_k v_{l',m'} & -\varphi_k v_{l,m} \end{bmatrix} \text{ (4-2);}$$

$$W_{l,l',m,m',k}^{(2)} = \frac{1}{\sqrt{4P}}\begin{bmatrix} v_{l,m} & v_{l',m'} & v_{l,m} & v_{l',m'} \\ \varphi_k v_{l,m} & \varphi_k v_{l',m'} & -\varphi_k v_{l,m} & -\varphi_k v_{l',m'} \end{bmatrix} \text{ (4-3).}$$

In formula (4-1), formula (4-2), and formula (4-3), $v_{l,m}$ and $\varphi_k$ have the same meaning as in embodiment one, parameters $l, l'$ belong to the first candidate set, and parameters $m, m'$ belong to the second candidate set.

Embodiment five

The codebook in embodiment two may also be expressed in formula (5-1):

$$W_{l,m,k,p^{(1)},p^{(2)}} = \frac{1}{\sqrt{2}}\begin{bmatrix} W_{l,m,k,p_{i,1}^{(1)},p_{i,1}^{(2)}}^1 & W_{l,m,k,p_{i,2}^{(1)},p_{i,2}^{(2)}}^2 \end{bmatrix} \text{ (5-1).}$$

In

$$W_{l,m,k,p^{(1)},p^{(2)}} = \frac{1}{\sqrt{2}}\begin{bmatrix} W_{l,m,k,p_{i,1}^{(1)},p_{i,1}^{(2)}}^1 & W_{l,m,k,p_{i,2}^{(1)},p_{i,2}^{(2)}}^2 \end{bmatrix} \text{ (5-1):}$$

$$W_{l,m,k,p_b^{(1)},p_b^{(2)}}^b = \frac{1}{\sqrt{P \sum_{i=0}^{2L-1}(p_{b,i}^{(1)}p_{b,i}^{(2)})^2}} = \begin{bmatrix} \sum_{i=0}^{L-1} v_{l_i,m_i}\, p_{b,i}^{(1)} p_{b,i}^{(2)}\, \varphi_{b,k_i} \\ \sum_{i=0}^{L-1} v_{l_i,m_i}\, p_{b,i+L}^{(1)} p_{b,i+L}^{(2)}\, \varphi_{b,k_{i+L}} \end{bmatrix} \text{ (5-2).}$$

In formula (5-2), b indicates the number of different transmission layers, and other variables are the same as in embodiment two.

Embodiment six

The codebook in embodiment three may also be expressed in formula (6-1), formula (6-2), or formula (6-3).

$$W^{(2)}_{l,m,p_b^{(1)},p_b^{(2)},M_v,y_{t,b}^{(f)},\varphi_{i,b,f}} = \frac{1}{\sqrt{2}}\left[W^1_{l,m,p_1^{(1)},p_1^{(2)},M_v,y_{t,1}^{(f)},\varphi_{i,1,f}} \quad W^2_{l,m,p_2^{(1)},p_2^{(2)},M_v,y_{t,2}^{(f)},\varphi_{i,2,f}}\right] \ (6\text{-}1);$$

$$W^{(2)}_{l,m,p_b^{(1)},p_b^{(2)},M_v,y_{t,b}^{(f)},\varphi_{i,b,f}} =$$

$$\frac{1}{\sqrt{3}}\left[W^1_{l,m,p_1^{(1)},p_1^{(2)},M_v,y_{t,1}^{(f)},\varphi_{i,1,f}} \quad W^2_{l,m,p_2^{(1)},p_2^{(2)},M_v,y_{t,2}^{(f)},\varphi_{i,2,f}} \quad W^3_{l,m,p_3^{(1)},p_3^{(2)},M_v,y_{t,3}^{(f)},\varphi_{i,3,f}}\right] \ (6\text{-}2);$$

$$W^{(2)}_{l,m,p_b^{(1)},p_b^{(2)},M_v,y_{t,b}^{(f)},\varphi_{i,b,f}} =$$

$$\frac{1}{2}\left[W^1_{l,m,p_1^{(1)},p_1^{(2)},M_v,y_{t,1}^{(f)},\varphi_{i,1,f}} \quad W^2_{l,m,p_2^{(1)},p_2^{(2)},M_v,y_{t,2}^{(f)},\varphi_{i,2,f}} \quad W^3_{l,m,p_3^{(1)},p_3^{(2)},M_v,y_{t,3}^{(f)},\varphi_{i,3,f}} \quad W^4_{l,m,p_4^{(1)},p_4^{(2)},M_v,y_{t,4}^{(f)},\varphi_{i,4,f}}\right]$$

$$(6\text{-}3).$$

In these three formulas:

$$W^b_{l,m,p_b^{(1)},p_b^{(2)},M_v,y_{t,b}^{(f)},\varphi_{i,b,f}} = \frac{1}{\sqrt{P\gamma_{t,b}}} = \begin{bmatrix} \sum_{i=0}^{L-1} v_{l_i,m_i}\, p_{b,0}^{(1)} \sum_{f=0}^{M_v-1} y_{t,b}^{(f)} p_{b,i,f}^{(2)} \varphi_{b,i,f} \\ \sum_{i=0}^{L-1} v_{l_i,m_i}\, p_{b,1}^{(1)} \sum_{f=0}^{M_v-1} y_{t,b}^{(f)} p_{b,i+L,f}^{(2)} \varphi_{b,i+L,f} \end{bmatrix} \ (6\text{-}4).$$

In formula (6-4), $\gamma_{t,b} = \sum_{i=0}^{2L-1}\left(p_{b,\lfloor\frac{i}{L}\rfloor}^{(1)}\right)^2 \left|\sum_{f=0}^{M_v-1} y_{t,b}^{(f)} p_{b,i,f}^{(2)} \varphi_{b,i,f}\right|^2$ . $P = 2N_1$. $N_1$ indicates the dimension of the first vector. The parameter b indicates different transmission data layers. The parameter $v_{l,m}$, $p_b^{(1)}, p_b^{(2)}$ , $M_v$, $y_{t,b}^{(f)}$ , $\varphi_{i,b,f}$ have the same meaning as in embodiment three.

Embodiment seven

The first vector may also be constructed by using a first function $f_1(l^{(1)}, m^{(1)})$ and a second function $f_2(l^{(2)}, m^{(2)})$. The first function and the second function are each a vector. The dimension of the first function is $N_1$. The dimension of the second function is $N_2$. The first parameter $l^{(1)}$ and the second parameter $m^{(1)}$ are variables of the first function. The third parameter $l^{(2)}$ and the fourth parameter $m^{(2)}$ are variables of the second function. The first parameter, the second parameter, the third parameter, and the fourth parameter are from a first candidate set, a second candidate set, a third candidate set, and a fourth candidate set respectively. Elements in the first candidate set are determined by parameters $N_1$ and $O_1$. Each second parameter corresponds to one first candidate set. Elements in the second candidate set are obtained from parameters $N_2$ and $O_2$. Each fourth parameter corresponds to one third candidate set. The following gives an example of generation. If the second communication node preconfigures the second candidate set as follows:

Table 7-1 Example second candidate set

| $i_{1,2}^{(1)}$ | 0 | 1 | 2 | 3 | 4 | 5 | 6 | 7 |
|---|---|---|---|---|---|---|---|---|
| $m^{(1)}$ | $\dfrac{1}{32}$ | $\dfrac{1}{30}$ | $\dfrac{1}{28}$ | $\dfrac{1}{26}$ | $\dfrac{1}{24}$ | $\dfrac{1}{22}$ | $\dfrac{1}{20}$ | $\dfrac{1}{18}$ |
| $i_{1,2}^{(1)}$ | 8 | 9 | 10 | 11 | 12 | 13 | 14 | 15 |

(continued)

| $i_{1,2}^{(1)}$ | 0 | 1 | 2 | 3 | 4 | 5 | 6 | 7 |
|---|---|---|---|---|---|---|---|---|
| $m^{(1)}$ | $\dfrac{1}{16}$ | $\dfrac{1}{14}$ | $\dfrac{1}{12}$ | $\dfrac{1}{10}$ | $\dfrac{1}{8}$ | $\dfrac{1}{6}$ | $\dfrac{1}{4}$ | $\dfrac{1}{2}$ |

Taking $O_{1,\,max} = 4$, the parameter $O_1$ is calculated by using formula (2) and stored in the table:

Table 7-2

| Correspondence between the parameter $O_1$, the first candidate set $C_{1,i}$, and the second parameter $m_i^{(1)}$ | | | | | | |
|---|---|---|---|---|---|---|
| $i$ | 1 | 2 | ... | 14 | 15 | 16 |
| $l_i^{(1)}$ | $\dfrac{1}{32}$ | $\dfrac{1}{30}$ | ... | $\dfrac{1}{6}$ | $\dfrac{1}{4}$ | $\dfrac{1}{2}$ |
| $O_{1,i}$ | 4 | 4 | ... | 3 | 2 | 1 |
| $C_{1,i}$ | $C_{1,1}$ | $C_{1,2}$ | ... | $C_{1,14}$ | $C_{1,15}$ | $C_{1,16}$ |

Here $C_{1,i}$ indicates the ith first candidate set. The form of $C_{1,i}$ is as follows:

Table 7-3 Example first candidate set $C_{1,i}$

| $i_{1,1}^{(1)}$ | 0 | 1 | 2 | 3 | ... | $N_1 O_{1,i}$ -1 |
|---|---|---|---|---|---|---|
| $l_i^{(1)}$ | 0 | $\dfrac{2}{N_1 O_{1,i}}$ | $\dfrac{4}{N_1 O_{1,i}}$ | $\dfrac{6}{N_1 O_{1,i}}$ | ... | $\dfrac{2(N_1 O_{1,i}-1)}{N_1 O_{1,i}}$ |

If the second communication node configures the fourth candidate set as follows:

Table 7-4 Example fourth candidate set

| $i_{1,2}^{(2)}$ | 0 | 1 | 2 | 3 | 4 | 5 | 6 | 7 |
|---|---|---|---|---|---|---|---|---|
| $m^{(2)}$ | $\dfrac{1}{8}$ | $\dfrac{1}{7}$ | $\dfrac{1}{6}$ | $\dfrac{1}{5}$ | $\dfrac{1}{4}$ | $\dfrac{1}{3}$ | $\dfrac{1}{2}$ | 1 |

Taking $O_{2,\,max} = 3$, the parameter $O_2$ is calculated by using formula (1) and stored in the table:

Table 7-5

| Correspondence between the parameter $O_2$, the third candidate set $C_{3,i}$, and the fourth parameter $m_i^{(2)}$ | | | | | | | | |
|---|---|---|---|---|---|---|---|---|
| $i$ | 1 | 2 | 3 | 4 | 5 | 6 | 7 | 8 |
| $m_i^{(2)}$ | $\dfrac{1}{8}$ | $\dfrac{1}{7}$ | $\dfrac{1}{6}$ | $\dfrac{1}{5}$ | $\dfrac{1}{4}$ | $\dfrac{1}{3}$ | $\dfrac{1}{2}$ | 1 |
| $O_{2,i}$ | 3 | 3 | 3 | 3 | 3 | 3 | 2 | 1 |
| $C_{3,i}$ | $C_{3,1}$ | $C_{3,2}$ | $C_{3,3}$ | $C_{3,4}$ | $C_{3,5}$ | $C_{3,6}$ | $C_{3,7}$ | $C_{3,8}$ |

Each fourth parameter (or each $O_2$) corresponds to one third candidate set $C_{3,i}$. The form of the third candidate set is shown in the following table:

Table 7-6 Example third candidate set $C_{3,i}$

| $i_{1,1}^{(2)}$ | 0 | 1 | 2 | 3 | ... | $N_2 O_{2,i}$ -1 |
|---|---|---|---|---|---|---|
| $l_i^{(2)}$ | 0 | $\dfrac{2}{N_2 O_{2,i}}$ | $\dfrac{4}{N_2 O_{2,i}}$ | $\dfrac{6}{N_2 O_{2,i}}$ | ... | $\dfrac{2(N_2 O_{2,i} - 1)}{N_2 O_{2,i}}$ |

The first vector may be constructed by using the first function $f_1(l, m)$ and the second function $f_2(l, m)$ and by using formula (7-1):

$$v_{l,m} = f_1(l, m) \otimes f_2(l, m) \quad (7\text{-}1).$$

Here $a \otimes b$ indicates the Kronecker product of the two vectors $a, b$. The following gives two examples of the first function $f_1(l, m)$ and the second function $f_2(l, m)$:

$$f_1(l, m) =$$

$$\left[ e^{j\pi\frac{(1-l^2)}{m\lambda}} \quad e^{j\pi\left[\frac{(1-l^2)}{m\lambda} - \frac{2dl}{\lambda} + \frac{2d^2m}{\lambda}\right]} \quad \ldots \quad e^{j\pi\left[\frac{(1-l^2)}{m\lambda} - \frac{2(n_1-1)dl}{\lambda} + \frac{2(n_1-1)^2d^2m}{\lambda}\right]} \quad \ldots \quad e^{j\pi\left[\frac{(1-l^2)}{m\lambda} - \frac{2(N_1-1)dl}{\lambda} + \frac{2(N_1-1)^2d^2m}{\lambda}\right]} \right]^T$$

(7-2);

$$f_2(l, m) =$$

$$\left[ e^{j\pi\frac{(1-l^2)}{m\lambda}} \quad e^{j\pi\left[\frac{(1-l^2)}{m\lambda} - \frac{2dl}{\lambda} + \frac{2d^2m}{\lambda}\right]} \quad \ldots \quad e^{j\pi\left[\frac{(1-l^2)}{m\lambda} - \frac{2(n_2-1)dl}{\lambda} + \frac{2(n_2-1)^2d^2m}{\lambda}\right]} \quad \ldots \quad e^{j\pi\left[\frac{(1-l^2)}{m\lambda} - \frac{2(N_2-1)dl}{\lambda} + \frac{2(N_2-1)^2d^2m}{\lambda}\right]} \right]^T$$

(7-3);

$$f_1(l, m) =$$

$$\left[ e^{j\pi\frac{(1-l^2)}{m}} \quad e^{j\pi\left[\frac{(1-l^2)}{m} - l + \frac{m}{2}\right]} \quad \ldots \quad e^{j\pi\left[\frac{(1-l^2)}{m} - (n_1-1)l + (n_1-1)^2\frac{m}{2}\right]} \quad \ldots \quad e^{j\pi\left[\frac{(1-l^2)}{m} - (N_1-1)l + (N_1-1)^2\frac{m}{2}\right]} \right]^T$$

(7-4);

$$f_2(l, m) =$$

$$\left[ e^{j\pi\frac{(1-l^2)}{m}} \quad e^{j\pi\left[\frac{(1-l^2)}{m} - l + \frac{m}{2}\right]} \quad \ldots \quad e^{j\pi\left[\frac{(1-l^2)}{m} - (n_2-1)l + (n_2-1)^2\frac{m}{2}\right]} \quad \ldots \quad e^{j\pi\left[\frac{(1-l^2)}{m} - (N_2-1)l + (N_2-1)^2\frac{m}{2}\right]} \right]^T$$

(7-5).

Formulas (7-2) and (7-3) are a first set of examples of functions $f_1(l, m)$ and $f_2(l, m)$. Formulas (7-4) and (7-5) are a second set of examples of functions $f_1(l, m)$ and $f_2(l, m)$. In addition, in these four formulas, j denotes an imaginary unit, $\lambda$ denotes the wavelength of the measurement reference signal, and d denotes a spacing between array elements of the transmitter. As described in the previous embodiments, when the first vector is generated by using the function $f_1(l, m)$ and the function $f_2(l, m)$, $f_1(l, m)$ is a vector containing $N_1$ elements, where at least one element is the product of the first

parameter and $n_1$ and/or the product of the second parameter and the square of $n_1$, and $n_1$ denotes the index of an element in the first vector; and $f_2(l, m)$ is a vector containing $N_2$ elements, where at least one element is the product of the first parameter and $n_2$ and/or the product of the second parameter and the square of $n_2$, and $n_2$ denotes the index of an element in the second vector.

Embodiment eight

In embodiment one and embodiment seven, the difference between elements in each first candidate set may also be determined by $N_1$ and multiple $O_1$. The following gives an example of the first candidate set:

$$C_1 = \{0, \frac{2}{N_1 O_{1,1}}, ..., \frac{2n_1}{N_1 O_{1,1}}, \frac{2n_1}{N_1 O_{1,1}} + \frac{2}{N_1 O_{1,2}}, ..., \frac{2n_1}{N_1 O_{1,1}} + \frac{2n_2}{N_1 O_{1,2}}, ..., \frac{2n_1}{N_1 O_{1,1}} + \frac{2n_2}{N_1 O_{1,2}}$$

$$+ \frac{2}{N_1 O_{1,3}}, ..., \frac{2n_1}{N_1 O_{1,1}} + \frac{2n_2}{N_1 O_{1,2}} + \frac{2n_3}{N_1 O_{1,3}}, ..., \sum_{i=1}^{k} \frac{2n_k}{N_1 O_{1,l}} \}$$

Embodiment nine

In embodiment seven, the difference between elements in each third candidate set may also be determined by $N_2$ and multiple $O_2$. The following gives an example of the third candidate set:

$$C_3 = \{0, \frac{2}{N_2 O_{2,1}}, ..., \frac{2n_1}{N_2 O_{2,1}}, \frac{2n_1}{N_2 O_{2,1}} + \frac{2}{N_2 O_{2,2}}, ..., \frac{2n_1}{N_2 O_{2,1}} + \frac{2n_2}{N_2 O_{2,2}}, ..., \frac{2n_1}{N_2 O_{2,1}} + \frac{2n_2}{N_2 O_{2,2}}$$

$$+ \frac{2}{N_2 O_{2,3}}, ..., \frac{2n_1}{N_2 O_{2,1}} + \frac{2n_2}{N_2 O_{2,2}} + \frac{2n_3}{N_2 O_{2,3}}, ..., \sum_{i=1}^{k} \frac{2n_k}{N_2 O_{2,k}} \}$$

In an embodiment, FIG. 4 is a block diagram of an information transmission apparatus according to an embodiment of present disclosure. This embodiment is applied to a first communication node. As shown in FIG. 4, the information transmission apparatus of this embodiment includes a receiver 310, a selector 320, and a communication module 330.

The receiver 310 is configured to receive a measurement reference signal.

The selector 320 is configured to select a precoding matrix from a codebook based on the measurement reference signal.

The precoding matrix is obtained from a first preset number of first vectors, the first vectors are constructed by using at least a first function, the first function includes at least one of a first parameter or a second parameter, the first parameter belongs to a first candidate set, the second parameter belongs to a second candidate set, the difference between two adjacent elements in the first candidate set is determined by a first coefficient and the dimension of the first function, the first coefficient is a positive integer, the dimension of the first function indicates the number of elements in the first function, the first coefficient takes at least one value in response to a given value of the dimension of the first function, and the first preset number is an integer greater than or equal to 1.

The communication module 330 is configured to report the selected precoding matrix to a second communication node.

In an embodiment, the difference between two adjacent elements in the first candidate set is determined by the first coefficient and the dimension of the first function in one of the following manners: The difference between two adjacent elements in each first candidate set is determined by the dimension of the first function and at least two first coefficients; or the difference between two adjacent elements in each first candidate set is determined by the dimension of the first function and one first coefficient.

In an embodiment, a correspondence exists between the first coefficient and the second parameter.

In an embodiment, a larger value of the second parameter indicates a smaller value of the first coefficient.

In an embodiment, the first coefficient is determined by the second parameter.

In an embodiment, the value of the first coefficient is determined by one of the following: the integer part of the ratio of the maximum element in the second candidate set to one element in the second candidate set; the ceiling value of the ratio of the maximum element in the second candidate set to one element in the second candidate set; the floor value of the ratio of the maximum element in the second candidate set to one element in the second candidate set; or the product of a first preset value and the ratio of the maximum element in the second candidate set to one element in the second candidate set, where the first preset value is any real number that enables the first coefficient to be a positive integer.

In an embodiment, in response to the value of the first coefficient being greater than a preconfigured maximum value, the value of the first coefficient is the preconfigured maximum value.

In an embodiment, in response to the difference between two adjacent elements in each first candidate set being determined by the dimension of the first function and one first coefficient, elements in each first candidate set are sorted in order of magnitude, where the difference between two adjacent elements is a constant value.

In an embodiment, the first function is a vector containing elements. The number of elements in the first function is the dimension of the first function. At least one of the elements in the first function is at least one of the following: the product of the first parameter and a first index or the product of the second parameter and the square of the first index. The first index is the index of an element in the first function. The first index starts from 0.

In an embodiment, each second parameter corresponds to one first candidate set.

In an embodiment, the first vector is generated by using the first function and a second function, the second function includes at least one of a third parameter or a fourth parameter, the third parameter belongs to a third candidate set, the fourth parameter belongs to a fourth candidate set, the difference between two adjacent elements in the third candidate set is determined by a second coefficient and the dimension of the second function, the second coefficient is a positive integer, the dimension of the second function indicates the number of elements in the second function, the second coefficient takes at least one value in response to a given value of the dimension of the second function, at least one third candidate set is available in response to a given value of the dimension of the second function, and the feature of the third candidate set is the same as the feature of the first candidate set.

In an embodiment, the second function is a vector containing elements. The number of elements in the second function is the dimension of the second function. At least one of the elements in the second function is at least one of the following: the product of the first parameter and a second index or the product of the second parameter and the square of the second index. The second index is the index of an element in the second function. The second index starts from 0.

The information transmission apparatus of this embodiment is configured to implement the information transmission method applied to the first communication node in an embodiment shown in FIG. 2. The implementation principles and technical effects of the information transmission apparatus of this embodiment are similar to those of the information transmission method applied to the first communication node in an embodiment shown in FIG. 2. The details are not described here again.

In an embodiment, FIG. 5 is a block diagram of an information transmission apparatus according to an embodiment of present disclosure. As shown in FIG. 5, the information transmission apparatus of this embodiment includes a determination module 410, a transmitter 420, and a receiver 430.

The determination module 410 is configured to determine a measurement reference signal.

The transmitter 420 is configured to transmit the measurement reference signal to a first communication node.

The receiver 430 is configured to receive a precoding matrix transmitted by the first communication node to perform a downlink precoding operation, where the precoding matrix is obtained from a first preset number of first vectors, the first vectors are constructed by using at least a first function, the first function includes at least one of a first parameter or a second parameter, the first parameter belongs to a first candidate set, the second parameter belongs to a second candidate set, the difference between two adjacent elements in the first candidate set is determined by a first coefficient and the dimension of the first function, the first coefficient is a positive integer, the dimension of the first function indicates the number of elements in the first function, the first coefficient takes at least one value in response to a given value of the dimension of the first function, and the first preset number is an integer greater than or equal to 1.

In an embodiment, the difference between two adjacent elements in the first candidate set is determined by the first coefficient and the dimension of the first function in one of the following manners: The difference between two adjacent elements in each first candidate set is determined by the dimension of the first function and at least two first coefficients; or the difference between two adjacent elements in each first candidate set is determined by the dimension of the first function and one first coefficient.

In an embodiment, a correspondence exists between the first coefficient and the second parameter.

In an embodiment, a larger value of the second parameter indicates a smaller value of the first coefficient.

In an embodiment, the first coefficient is determined by the second parameter.

In an embodiment, the value of the first coefficient is determined by one of the following: the integer part of the ratio of the maximum element in the second candidate set to one element in the second candidate set; the ceiling value of the ratio of the maximum element in the second candidate set to one element in the second candidate set; the floor value of the ratio of the maximum element in the second candidate set to one element in the second candidate set; or the product of a first preset value and the ratio of the maximum element in the second candidate set to one element in the second candidate set, where the first preset value is any real number that enables the first coefficient to be a positive integer.

In an embodiment, in response to the value of the first coefficient being greater than a preconfigured maximum value, the value of the first coefficient is the preconfigured maximum value.

In an embodiment, in response to the difference between two adjacent elements in each first candidate set being determined by the dimension of the first function and one first coefficient, elements in each first candidate set are sorted in order of magnitude, where the difference between two adjacent elements is a constant value.

In an embodiment, the first function is a vector containing elements. The number of elements in the first function is the dimension of the first function. At least one of the elements in the first function is at least one of the following: the product of the first parameter and a first index or the product of the second parameter and the square of the first index. The first index is the index of an element in the first function. The first index starts from 0.

In an embodiment, each second parameter corresponds to one first candidate set.

In an embodiment, the first vector is generated by using the first function and a second function, the second function includes at least one of a third parameter or a fourth parameter, the third parameter belongs to a third candidate set, the fourth parameter belongs to a fourth candidate set, the difference between two adjacent elements in the third candidate set is determined by a second coefficient and the dimension of the second function, the second coefficient is a positive integer, the dimension of the second function indicates the number of elements in the second function, the second coefficient takes at least one value in response to a given value of the dimension of the second function, at least one third candidate set is available in response to a given value of the dimension of the second function, and the feature of the third candidate set is the same as the feature of the first candidate set.

In an embodiment, the second function is a vector containing elements. The number of elements in the second function is the dimension of the second function. At least one of the elements in the second function is at least one of the following: the product of the first parameter and a second index or the product of the second parameter and the square of the second index. The second index is the index of an element in the second function. The second index starts from 0.

The information transmission apparatus of this embodiment is configured to implement the information transmission method applied to the second communication node in an embodiment shown in FIG. 3. The implementation principles and technical effects of the information transmission apparatus of this embodiment are similar to those of the information transmission method applied to the second communication node in an embodiment shown in FIG. 3. The details are not described here again.

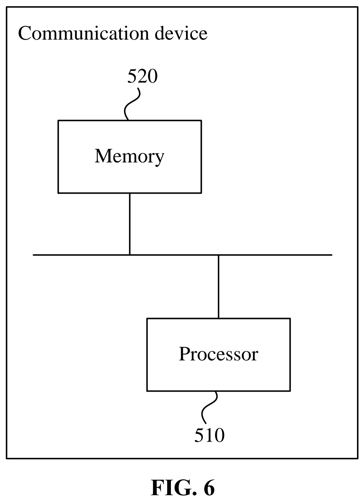

In an embodiment, FIG. 6 is a diagram illustrating the structure of a communication device according to an embodiment of present disclosure. As shown in FIG. 6, the device of present disclosure includes a processor 510 and a memory 520. One or more processors 510 may be configured in the device. FIG. 6 uses one processor 510 as an example. One or more memories 520 may be configured in the device. FIG. 6 uses one memory 520 as an example. The processor 510 and the memory 520 of the device may be connected by a bus or in other manners. FIG. 6 uses connection by a bus as an example. In this embodiment, the device may be a resource management component.

As a computer-readable storage medium, the memory 520 may be configured to store software programs and computer-executable programs and modules, such as program instructions/modules (for example, the receiver 310, the selector 320, and the communication module 330 in the information transmission apparatus applied to the first communication node) corresponding to the device of any embodiment of present disclosure. The memory 520 may include a program storage region and a data storage region. The program storage region may store an operating system and an application program required by at least one function. The data storage region may store data created according to the use of the device. Additionally, the memory 520 may include a high-speed random-access memory and may also include a nonvolatile memory such as at least one disk memory, a flash memory, or another nonvolatile solid-state memory. In some examples, memories 520 remote from the processor 510 and connectable to the device via a network may be provided. Examples of the network include, but are not limited to, the Internet, an intranet, a local area network, a mobile communication network, and a combination thereof.

In the case where the communication device is the first communication node, the device may be configured to perform the information transmission method applied by the first communication node according to any previous embodiment and has corresponding functions and effects.

In the case where the communication device is the second communication node, the device may be configured to perform the information transmission method applied by the second communication node according to any previous embodiment and has corresponding functions and effects.

An embodiment of present disclosure provides a storage medium including computer-executable instructions which, when executed by a computer processor, cause the processor to perform an information transmission method applied to a first communication node. The method includes receiving a measurement reference signal; selecting a precoding matrix from a codebook based on the measurement reference signal, where the precoding matrix is obtained from a first preset number of first vectors, the first vectors are constructed by using at least a first function, the first function includes at least one of a first parameter or a second parameter, the first parameter belongs to a first candidate set, the second parameter belongs to a second candidate set, the difference between two adjacent elements in the first candidate set is determined by a first coefficient and the dimension of the first function, the first coefficient is a positive integer, the dimension of the first function indicates the number of elements in the first function, the first coefficient takes at least one value in response to a given value of the dimension of the first function, and the first preset number is an integer greater than or equal to 1; and reporting the selected precoding matrix to a second communication node.

An embodiment of present disclosure further provides a storage medium including a computer-executable instruction, where the computer-executable instruction, when executed by a computer processor, is configured to perform an information transmission method applied to a second communication node, and the method includes: determining a measurement reference signal; sending the measurement reference signal to a first communication node; and receiving a precoding matrix transmitted by the first communication node, to perform a downlink precoding operation, where the precoding matrix is obtained by using a first preset number of first vectors, the first vector is constructed by using at least a first function, and the first function includes at least one of a first parameter and a second parameter, the first parameter belongs to a first candidate set, the second parameter belongs to a second candidate set, and a difference between two adjacent elements in the first candidate set is determined by using a first coefficient and a dimension of the first function, where the first coefficient is a positive integer, and the dimension of the first function indicates a number of elements in the first function; and for a determined value of the dimension of the first function, the first coefficient is at least one value, and the first preset number is an integer greater than or equal to 1.

An embodiment of present disclosure provides a storage medium including computer-executable instructions which, when executed by a computer processor, cause the processor to perform an information transmission method applied to a second communication node. The method includes determining a measurement reference signal; transmitting the measurement reference signal to a first communication node; and receiving a precoding matrix transmitted by the first communication node to perform a downlink precoding operation, where the precoding matrix is obtained from a first preset number of first vectors, the first vectors are constructed by using at least a first function, the first function includes at least one of a first parameter or a second parameter, the first parameter belongs to a first candidate set, the second parameter belongs to a second candidate set, the difference between two adjacent elements in the first candidate set is determined by a first coefficient and the dimension of the first function, the first coefficient is a positive integer, the dimension of the first function indicates the number of elements in the first function, the first coefficient takes at least one value in response to a given value of the dimension of the first function, and the first preset number is an integer greater than or equal to 1.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of present disclosure may be implemented in hardware or special-purpose circuits, software, logic, or any combination thereof. For example, some aspects may be implemented in hardware while other aspects may be implemented in firmware or software executable by a controller, a microprocessor, or another computing apparatus, though present disclosure is not limited thereto.

Embodiments of present disclosure may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of present disclosure may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA) and a processor based on a multi-core processor architecture.

The preceding describes preferred embodiments of present disclosure that are not intended to limit present disclosure. For those skilled in the art, present disclosure may have various modifications and variations. Any modifications, equivalent substitutions, improvements, and the like made within the spirit and principle of present disclosure are within the scope of present disclosure.

**Claims**

1. An information transmission method, the method being applied to a first communication node and comprising:

    receiving a measurement reference signal;

selecting a precoding matrix from a codebook based on the measurement reference signal; and
reporting the selected precoding matrix to a second communication node;
wherein the precoding matrix is obtained from a first preset number of first vectors, the first vectors are constructed by using at least a first function, the first function comprises at least one of a first parameter or a second parameter, the first parameter belongs to a first candidate set, the second parameter belongs to a second candidate set, a difference between two adjacent elements in the first candidate set is determined by a first coefficient and a dimension of the first function, the first coefficient is a positive integer, the dimension of the first function indicates a number of elements in the first function, the first coefficient takes at least one value in response to a given value of the dimension of the first function, and the first preset number is an integer greater than or equal to 1.

2. The method of claim 1, wherein the difference between two adjacent elements in the first candidate set is determined by the first coefficient and the dimension of the first function in one of the following manners:

a difference between two adjacent elements in each first candidate set is determined by the dimension of the first function and at least two first coefficients; or
a difference between two adjacent elements in each first candidate set is determined by the dimension of the first function and one first coefficient.

3. The method of claim 1, wherein a correspondence exists between the first coefficient and the second parameter.

4. The method of claim 3, wherein a larger value of the second parameter indicates a smaller value of the first coefficient.

5. The method of claim 1, wherein the first coefficient is determined by the second parameter.

6. The method of claim 5, wherein a value of the first coefficient is determined by one of the following:

an integer part of a ratio of a maximum element in the second candidate set to one element in the second candidate set;
a ceiling value of a ratio of a maximum element in the second candidate set to one element in the second candidate set;
a floor value of a ratio of a maximum element in the second candidate set to one element in the second candidate set; or
a product of a first preset value and a ratio of a maximum element in the second candidate set to one element in the second candidate set, wherein the first preset value is any real number that enables the first coefficient to be a positive integer.

7. The method of claim 6, wherein in response to the value of the first coefficient being greater than a preconfigured maximum value, the value of the first coefficient is the preconfigured maximum value.

8. The method of claim 1, wherein in response to a difference between two adjacent elements in each first candidate set being determined by the dimension of the first function and one first coefficient, elements in each first candidate set are sorted in order of magnitude, wherein the difference between two adjacent elements is a constant value.

9. The method of any one of claims 1 to 8, wherein the first function is a vector comprising elements, wherein the number of elements in the first function is the same as the number of dimensions of the first function, and at least one of the elements in the first function is at least one of the following: a product of the first parameter and a first index or a product of the second parameter and a square of the first index, wherein the first index is an index of an element in the first function, and the first index starts from 0.

10. The method of any one of claims 1 to 8, wherein each second parameter corresponds to one first candidate set.

11. The method of claim 1, wherein the first vector is generated by using the first function and a second function, the second function comprises at least one of a third parameter or a fourth parameter, the third parameter belongs to a third candidate set, the fourth parameter belongs to a fourth candidate set, a difference between two adjacent elements in the third candidate set is determined by a second coefficient and a dimension of the second function, the second coefficient is a positive integer, the dimension of the second function indicates a number of elements in the second function, the second coefficient takes at least one value in response to a given value of the dimension of the

**EP 4 645 708 A1**

second function, at least one third candidate set is available in response to a given value of the dimension of the second function, and a feature of the third candidate set is the same as a feature of the first candidate set.

**12.** The method of claim 11, wherein the second function is a vector comprising elements, wherein the number of elements in the second function is the same as the number of dimensions of the second function, and at least one of the elements in the second function is at least one of the following: a product of the first parameter and a second index or a product of the second parameter and a square of the second index, wherein the second index is an index of an element in the second function, and the second index starts from 0.

**13.** An information transmission method, the method being applied to a second communication node and comprising:

determining a measurement reference signal;
transmitting the measurement reference signal to a first communication node; and
receiving a precoding matrix transmitted by the first communication node to perform a downlink precoding operation, wherein the precoding matrix is obtained from a first preset number of first vectors, the first vectors are constructed by using at least a first function, the first function comprises at least one of a first parameter or a second parameter, the first parameter belongs to a first candidate set, the second parameter belongs to a second candidate set, a difference between two adjacent elements in the first candidate set is determined by a first coefficient and a dimension of the first function, the first coefficient is a positive integer, the dimension of the first function indicates a number of elements in the first function, the first coefficient takes at least one value in response to a given value of the dimension of the first function, and the first preset number is an integer greater than or equal to 1.

**14.** A communication device, comprising a memory and at least one processor, wherein

the memory is configured to store at least one program; and
when executed by the at least one processor, the at least one program causes the at least one processor to perform the method of any one of claims 1 to 12 or the method of claim 13.

**15.** A storage medium storing a computer program which, when executed by a processor, causes the processor to perform the method of any one of claims 1 to 12 or the method of claim 13.

20

**FIG. 1**

```
┌──────────────────────────────────────────────────────┐
│      Receive a measurement reference signal           │  S110
└──────────────────────────────────────────────────────┘
                          │
                          ▼
┌──────────────────────────────────────────────────────┐
│  Select a precoding matrix from a codebook based on the │  S120
│           measurement reference signal                 │
└──────────────────────────────────────────────────────┘
                          │
                          ▼
┌──────────────────────────────────────────────────────┐
│  Report the selected precoding matrix to the second communication │  S130
│                      node                              │
└──────────────────────────────────────────────────────┘
```

**FIG. 2**

```
┌─────────────────────────────────────────────────────────┐
│         Determine a measurement reference signal          │ ⌇ S210
└─────────────────────────────────────────────────────────┘
                            │
                            ▼
┌─────────────────────────────────────────────────────────┐
│   Transmit the measurement reference signal to the first  │ ⌇ S220
│                   communication node                      │
└─────────────────────────────────────────────────────────┘
                            │
                            ▼
┌─────────────────────────────────────────────────────────┐
│ Receive a precoding matrix transmitted by the first       │ ⌇ S230
│ communication node to perform a downlink precoding         │
│ operation                                                  │
└─────────────────────────────────────────────────────────┘
```

**FIG. 3**

```
┌─────────────────────────────────────────────────────────┐
│ Information transmission apparatus                         │
│                                                           │
│        310            320              330                 │
│                                                           │
│   ┌──────────┐   ┌──────────┐   ┌──────────────┐          │
│   │ Receiver │───│ Selector │───│ Communication │          │
│   │          │   │          │   │   module      │          │
│   └──────────┘   └──────────┘   └──────────────┘          │
└─────────────────────────────────────────────────────────┘
```

**FIG. 4**

```
┌─────────────────────────────────────────────────────────┐
│ Information transmission apparatus                         │
│                                                           │
│        410            420              430                 │
│                                                           │
│   ┌──────────────┐  ┌──────────┐   ┌──────────┐           │
│   │ Determination│──│Transmitter│──│ Receiver │           │
│   │   module     │  │          │   │          │           │
│   └──────────────┘  └──────────┘   └──────────┘           │
└─────────────────────────────────────────────────────────┘
```

**FIG. 5**

Communication device

520

Memory

Processor

510

**FIG. 6**

## INTERNATIONAL SEARCH REPORT

| International application No. |
| --- |
| **PCT/CN2023/135631** |

**A. CLASSIFICATION OF SUBJECT MATTER**

H04B7/0456(2017.01)i

According to International Patent Classification (IPC) or to both national classification and IPC

**B. FIELDS SEARCHED**

Minimum documentation searched (classification system followed by classification symbols)

IPC:H04B, H04W, H04Q

Documentation searched other than minimum documentation to the extent that such documents are included in the fields searched

Electronic data base consulted during the international search (name of data base and, where practicable, search terms used)

CNTXT, WPABS, WPABSC, ENTXTC, VEN, VCN, CNKI, 3GPP: 测量, 参考信号, 预编码, 矩阵, 码本, 上报, 候选, 集合, measurement, reference signal, precoding, matrix, codebook, reporting, candidate, set

**C. DOCUMENTS CONSIDERED TO BE RELEVANT**

| Category* | Citation of document, with indication, where appropriate, of the relevant passages | Relevant to claim No. |
| --- | --- | --- |
| X | CN 114142899 A (COMBA NETWORK SYSTEMS CO., LTD.) 04 March 2022 (2022-03-04) description, paragraphs [0037]-[0233] | 1-15 |
| X | US 2020212974 A1 (HUAWEI TECHNOLOGIES CO., LTD.) 02 July 2020 (2020-07-02) description, paragraphs [0006]-[0111] | 1-15 |
| A | CN 108352875 A (HUAWEI TECHNOLOGIES CO., LTD.) 31 July 2018 (2018-07-31) entire document | 1-15 |
| A | US 2016065279 A1 (HUAWEI TECHNOLOGIES CO., LTD.) 03 March 2016 (2016-03-03) entire document | 1-15 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **29 January 2024** | **06 February 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| CN | 114142899 | A | 04 March 2022 | None | | | |
| US | 2020212974 | A1 | 02 July 2020 | EP | 3672097 | A4 | 24 June 2020 |
| | | | | WO | 2019047705 | A1 | 14 March 2019 |
| | | | | CN | 109495149 | A | 19 March 2019 |
| CN | 108352875 | A | 31 July 2018 | WO | 2017075819 | A1 | 11 May 2017 |
| US | 2016065279 | A1 | 03 March 2016 | EP | 2985923 | A1 | 17 February 2016 |
| | | | | WO | 2014179991 | A1 | 13 November 2014 |
| | | | | JP | 2016520266 | A | 11 July 2016 |
| | | | | CN | 105027457 | A | 04 November 2015 |
| | | | | CN | 108616299 | A | 02 October 2018 |

Form PCT/ISA/210 (patent family annex) (July 2022)